(19) Europäisches Patentamt
European Patent Office
Office européen des brevets

(11) **EP 4 618 632 A1**

(12) **EUROPEAN PATENT APPLICATION**
published in accordance with Art. 153(4) EPC

(43) Date of publication:
**17.09.2025 Bulletin 2025/38**

(51) International Patent Classification (IPC):
*H04W 52/02* (2009.01)

(21) Application number: 23922458.7

(22) Date of filing: **06.12.2023**

(86) International application number:
**PCT/CN2023/136646**

(87) International publication number:
**WO 2024/169342 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2023 CN 202310171765**

(71) Applicant: **ZTE Corporation**
**Shenzhen, Guangdong 518057 (CN)**

(72) Inventors:
• **LIU, Kun**
**Shenzhen, Guangdong 518057 (CN)**
• **DAI, Bo**
**Shenzhen, Guangdong 518057 (CN)**
• **YANG, Weiwei**
**Shenzhen, Guangdong 518057 (CN)**
• **HU, Youjun**
**Shenzhen, Guangdong 518057 (CN)**
• **CHEN, Mengzhu**
**Shenzhen, Guangdong 518057 (CN)**
• **XU, Jun**
**Shenzhen, Guangdong 518057 (CN)**

(74) Representative: **Aipex B.V.**
**Vestdijk 51**
**5611 CA Eindhoven (NL)**

(54) **MESSAGE SENDING METHOD, ELECTRONIC DEVICE AND STORAGE MEDIUM**

(57) Provided are a message sending method, an electronic device, and a storage medium. The message sending method includes sending a first message, where the first message occupies at least P first-type symbols in time domain, P is an integer greater than or equal to 1, the time domain positions of M first-type symbols among the at least P first-type symbols are aligned with or included in Q second-type symbols, M is a positive integer less than P, and Q is a positive integer. In this manner, the first message is sent through the first-type symbols, thereby achieving the transmission of LP-WUS, achieving the sleep wakeup of the terminal, and improving the energy efficiency of the terminal.

Send a first message, where the first message occupies at least P first-type symbols in time domain, P is an integer greater than or equal to 1, time domain positions of M first-type symbols among the at least P first-type symbols are aligned with or included in Q second-type symbols, M is a positive integer less than P, and Q is a positive integer — 110

**FIG. 1**

EP 4 618 632 A1

**Description**

TECHNICAL FIELD

The present application relates to the technical field of wireless communications, for example, a message sending method, an electronic device, and a storage medium.

BACKGROUND

Currently, in 5G communication systems, delay, reliability, and availability have become important indicators of current system performance. In addition, the energy efficiency of the terminal device is also an important part of performance indicators. Currently, the energy efficiency of the terminal device is relatively low, and the user is often required to charge the terminal device on a daily or weekly basis. Generally, the 5G device consumes tens of milliwatts of power in the Radio Resource Control (RRC) idle state or the RRC inactive state and consumes hundreds of milliwatts of power in the RRC connected state. The power consumption of the 5G device often depends on the wake-up cycle. Therefore, currently, to satisfy the battery life requirements, how to send a low-power wake-up signal (LP-WUS) has become a problem that needs to be solved urgently.

SUMMARY

The embodiments of the present application provide a message sending method, thereby achieving the transmission of LP-WUS and improving the energy efficiency of the terminal.
An embodiment of the present application provides a message sending method. The message sending method includes the following:
A first message is sent, where the first message occupies at least P first-type symbols in time domain, and P is an integer greater than or equal to 1.
Time domain positions of M first-type symbols among the at least P first-type symbols are aligned with or included in Q second-type symbols, where M is a positive integer less than P, and Q is a positive integer.
In some embodiments of the present application, at least one of the value of M or the value of Q is determined according to first information, where the first information includes at least one of the following: time domain resource ratio information for uplink time domain resources and downlink time domain resources; the number of downlink time domain resources within a period; the number of consecutive downlink time domain resources within a period; a downlink subcarrier spacing (SCS) size; the time domain length of a second-type symbol; or a cyclic prefix (CP) value corresponding to a second-type symbol.
In some embodiments of the present application, the time domain resource ratio information is indicated by first index information.
In some embodiments of the present application, the downlink SCS size corresponds to at least one of pieces of the first information.
In some embodiments of the present application, the period is determined according to the downlink SCS.
In some embodiments of the present application, a first-type symbol includes at least one of the following: an on-off keying (OOK) symbol, an amplitude shift keying symbol, a frequency shift keying symbol, or a phase shift keying symbol.
In some embodiments of the present application, a second-type symbol includes at least an orthogonal frequency-division multiplexing (OFDM) time domain symbol.
In another aspect, an embodiment of the present application further provides a message sending method. The message sending method includes the following:
A first message is sent, where the first message occupies at least P first-type symbols in time domain, and P is an integer greater than or equal to 1.
In some embodiments of the present application, M first-type symbols among the at least P first-type symbols carry first data information $S_{M1}$ with a length of M1, and the first data information $S_{M1}$ includes M1 elements, where M is an integer less than or equal to P, and M1 is an integer greater than or equal to 1.
In some embodiments of the present application, the message sending method further includes repeating each of the M1 elements in the first data information $S_{M1}$ at least once to form second data information $Q_K$, where the length of the second data information $Q_K$ is K.
In some embodiments of the present application, the sum of the number of repetition times of each of the M1 elements in the second data information $Q_K$ is K.
In some other embodiments of the present application, the number of repetition times of each of the M1 elements in the second data information $Q_K$ is the same or independently configured.

In some other embodiments of the present application, a value of an element in the first data information $S_{M1}$ determines the number of repetition times of the element in the second data information $Q_K$.

In some embodiments of the present application, the first number of repetition times of an element with the value being 1 is greater than the second number of repetition times of an element with the value being 0.

In some embodiments of the present application, the first number of repetition times of an element with the value being 1 is C times of the second number of repetition times of an element with the value being 0, where C is an integer greater than or equal to 0.

In some embodiments of the present application, the message sending method further includes converting each of the M1 elements in the first data information $S_{M1}$ into at least two sub-elements; and repeating the at least two sub-elements of each of the M1 elements in the first data information $S_{M1}$ to form second data information $Q_K$, where the length of the second data information $Q_K$ is K.

In some embodiments of the present application, the number of repetition times of each sub-element is the same or independently configured.

In some embodiments of the present application, the at least two sub-elements include a first sub-element and a second sub-element, and the values of all the first sub-elements in the second data information $Q_K$ are 0.

In some embodiments of the present application, the at least two sub-elements include a first sub-element and a second sub-element, and a value of each second sub-element in the second data information $Q_K$ is a value of a corresponding element in the first data information $S_{M1}$ or is determined according to a value of a corresponding element in the first data information $S_{M1}$.

In another aspect, an embodiment of the present application further provides a message sending method. The message sending method includes the following:

A first message is sent, where the first message occupies at least P first-type symbols in time domain, where P is an integer greater than or equal to 1.

In some embodiments of the present application, M first-type symbols among the at least P first-type symbols carry first data information $S_{M1}$ with a length of M1, and the message sending method further includes the following:

Second data information $Q_K$ is formed according to the first data information $S_{M1}$, where the first data information $S_{M1}$ includes M1 elements, and the length of the second data information $Q_K$ is K.

The second data information $Q_K$ is scrambled with scrambling code information.

In some embodiments of the present application, that the second data information $Q_K$ is formed according to the first data information $S_{M1}$ includes at least one of the following:

Each element in the first data information $S_{M1}$ is repeated at least once to form the second data information $Q_K$.

Alternatively, each of the M1 elements in the first data information $S_{M1}$ is converted into at least two sub-elements, and the at least two sub-elements of each of the M1 elements are repeated to form the second data information $Q_K$.

In some embodiments of the present application, elements in the second data information $Q_K$ corresponding to a same first-type symbol are scrambled with same scrambling code information.

Alternatively, elements in the second data information $Q_K$ and corresponding to a same element in the first data information $S_{M1}$ are scrambled with same scrambling code information.

In some embodiments of the present application, elements in the second data information $Q_K$ corresponding to different first-type symbols are scrambled with scrambling code information generated in at least one of the following manners:

The scrambling code information is determined based on a predetermined formula;

The scrambling code information is generated independently; or

The scrambling code information is generated based on a predetermined principle.

In some embodiments of the present application, elements in the second data information $Q_K$ corresponding to different elements in the first data information $S_{M1}$ are scrambled with scrambling code information generated in at least one of the following manners:

The scrambling code information is determined based on a predetermined formula;

The scrambling code information is generated independently; or

The scrambling code information is generated based on a predetermined principle.

In some embodiments of the present application, the scrambling code information includes at least one of the following: scrambling code parameters; or a scrambling code parameter set.

In some embodiments of the present application, the number of the scrambling code parameters in the scrambling code parameter set is the same as the number of all the elements in the second data information $Q_K$ or the total number of all the sub-elements in the second data information $Q_K$.

In another aspect, an embodiment of the present application further provides an electronic device. The electronic device includes one or more processors and a memory configured to store one or more instructions.

When the one or more instructions are executed by the one or more processors, the one or more processors perform the message sending method of any embodiment of the present application.

In another aspect, an embodiment of the present application further provides a computer-readable storage medium storing one or more instructions which, when executed by one or more processors, cause performing the message sending method of any embodiment of the present application.

BRIEF DESCRIPTION OF DRAWINGS

FIG. 1 is a flowchart of a message sending method according to an embodiment of the present application.

FIG. 2 is another flowchart of a message sending method according to an embodiment of the present application.

FIG. 3 is a schematic diagram of a message sending method according to an embodiment of the present application.

FIG. 4 is a schematic diagram of a message sending method according to an embodiment of the present application.

FIG. 5 is a schematic diagram of a message sending method according to an embodiment of the present application.

FIG. 6 is another flowchart of a message sending method according to an embodiment of the present application.

FIG. 7 is a schematic diagram of a message sending method according to an embodiment of the present application.

FIG. 8 is a schematic diagram of the second data information processing according to an embodiment of the present application.

FIG. 9 is a schematic diagram of a message sending method according to an embodiment of the present application.

FIG. 10 is a schematic diagram of the second data information processing according to an embodiment of the present application.

FIG. 11 is a diagram illustrating the structure of a message sending apparatus according to an embodiment of the present application.

FIG. 12 is a diagram illustrating the structure of an electronic device according to an embodiment of the present application.

DETAILED DESCRIPTION

It is to be understood that the embodiments described herein are intended to explain the present application, not to limit the present application.

In the subsequent description, a word such as "module", "component", or "unit" for representing an element is used merely to facilitate the description of the present application and has no particular meaning in itself. Therefore, "module", "component", and "unit" may be used in a mixed manner.

To satisfy the battery life requirements of the communication device, the introduction of the LP-WUS mechanism is currently being considered. In this mechanism, the user equipment (UE) receives the LP-WUS through a separate receiver and wakes up the main radio device for data transmission and reception according to the received LP-WUS. When the user equipment (UE) does not detect the LP-WUS, the main radio device is in a deep sleep state. This mechanism may be used to reduce the power consumption of the terminal, but the specific transmission manner of the LP-WUS has not yet been clarified.

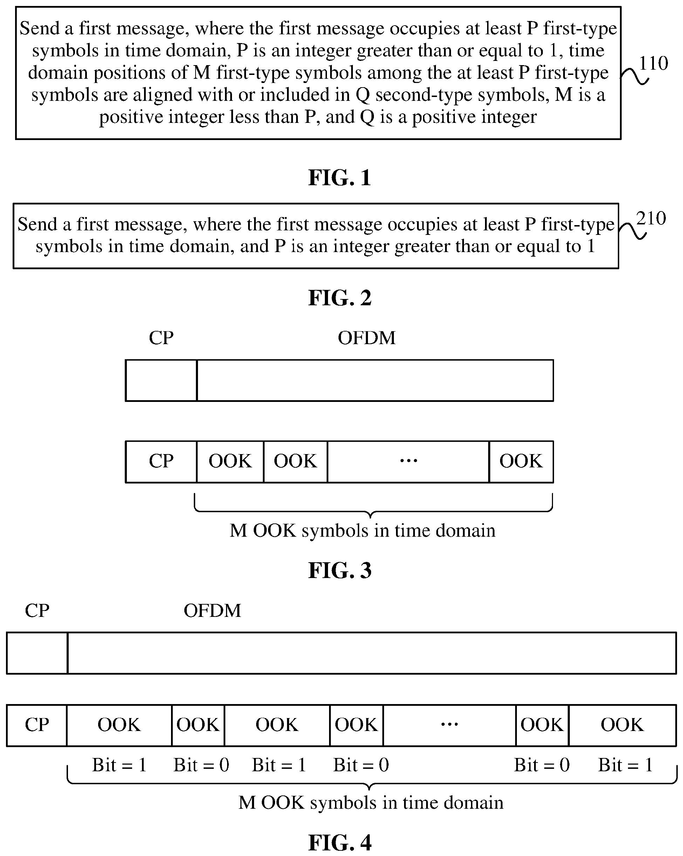

FIG. 1 is a flowchart of a message sending method according to an embodiment of the present application. The embodiments of the present application may be applied to the transmission of LP-WUSs. Referring to FIG. 1, the message sending method provided in the embodiments of the present application includes the following operation 110.

In the operation 110, a first message is sent, where the first message occupies at least P first-type symbols in time domain, P is an integer greater than or equal to 1, time domain positions of M first-type symbols among the at least P first-type symbols are aligned with or included in Q second-type symbols, M is a positive integer less than P, and Q is a positive integer.

In the embodiments of the present application, the first message may occupy multiple first-type symbols, and the time domain positions of all or some of the multiple first-type symbols may be aligned with or included in Q second-type symbols. Specifically, the time domain resources may be any combination of subframes, slots, and symbols, where one subframe includes at least one slot, and one slot includes at least one symbol.

In some embodiments of the present application, a first-type symbol may include at least one of the following: an OOK symbol, an amplitude shift keying symbol, a frequency shift keying symbol, or a phase shift keying symbol.

In some other embodiments of the present application, a second-type symbol includes at least an OFDM symbol in time domain.

In some embodiments of the present application, at least one of the value of M or the value of Q is determined according to first information, where the first information includes at least one of the following: time domain resource ratio information for uplink time domain resources and downlink time domain resources; the number of downlink time domain resources within a period; the number of consecutive downlink time domain resources within a period; a downlink SCS size; the time domain length of a second-type symbol; or a CP value corresponding to a second-type symbol.

In the embodiments of the present application, the number of first-type symbols occupied by the first message and aligned with the second symbols may be determined according to the first information, and the first information may include time domain resource ratio information for uplink time domain resources and downlink time domain resources, the number of downlink time domain resources within a period, the number of consecutive downlink time domain resources within a period, a downlink SCS size, the time domain length of a second-type symbol, a CP value corresponding to a second-type symbol, and the like.

In some embodiments of the present application, the downlink SCS size corresponds to at least one of pieces of the first information.

In the embodiments of the present application, a correspondence exists between the downlink SCS size and the first information, and the correspondence may be used to determine the value of M and/or the value of Q.

In some other embodiments of the present application, the period is determined according to the downlink SCS.

Specifically, the period, corresponding to the downlink time domain resource data or corresponding to the consecutive downlink time domain resource data, in the first information for determining the value of M and/or the value of Q may be determined according to the downlink SCS.

In an example embodiment, in the new radio (NR) system, the periodicity configured for uplink and downlink slots may be defined as DL-UL-TransmissionPeriodicity, and the periodicity may be in units of milliseconds (ms). In addition, the value of DL-UL-TransmissionPeriodicity may be related to the downlink (DL) SCS size of the NR system. In some embodiments of the present application, the SCS supported by NR includes 15 kHz, 30 kHz, 60 kHz, 120 kHz, and 240 kHz. The value of M and/or the value of Q may be determined according to the SCS size.

In some other embodiments, the SCS may also be expressed in $\mu$, that is:

$$SCS = 2^{\mu} \cdot 15[\text{kHz}].$$

Herein, the value of $\mu$ is 0, 1, 2, 3, or 4. Correspondingly, when $\mu = 0$, SCS = 15 kHz; when $\mu = 1$, SCS = 30 kHz; when $\mu = 2$, SCS = 60 kHz; when $\mu = 3$, SCS = 120 kHz; and when $\mu = 4$, SCS = 240 kHz. In the embodiments of the present application, the value of M and/or the value of Q may be determined according to the value of $\mu$.

In some embodiments of the present application, the time domain resource ratio information is indicated by first index information.

Specifically, the time domain resource ratio information may be indicated by the first index information, thereby determining the number of required first-type symbols and the number of required second-type symbols, i.e., determining the value of M and/or the value of Q. The first index information may at least include ratio index information. It is to be understood that other index information, for example, uplink and downlink resource indexes, may be within the scope of the embodiments of the present application.

In an example embodiment, one subframe includes at least one slot, one slot includes at least one symbol, and the time domain resources occupied by the first message may be any combination of one or more of subframes, slots, and symbols. The downlink time domain resources may include R1 subframes, R2 slots, and R3 symbols, the R1 subframes and the R2 slots may be converted to be in units of symbols, and as a result, the downlink time domain resources may include R4 symbols. Correspondingly, the uplink time domain resources may include F1 subframes, F2 slots, and F3 symbols, and when F1 subframes and F2 slots are converted to be in units of symbols, the uplink time domain resources may include F4 symbols. In this case, the ratio C of the uplink time domain resources to the downlink time domain resources may be R4:F4. In the embodiments of the present application, the value of M and/or the value of Q may be determined according to the value C of the time domain resource ratio. In some embodiments of the present application, when multiple ratios of the uplink time domain resources to the downlink time domain resources exist, the ratio of the uplink time domain resources to the downlink time domain resources may be indicated by the ratio index information. That is, the value of M and/or the value of Q may be determined according to the time domain resource ratio information. It is to be understood that a mapping relationship exists between the ratio index information and the value of M and/or the value of Q.

In some embodiments of the present application, the value of M may be determined according to the CP value.

Specifically, the time domain positions of M OOK symbols may be located in one OFDM symbol, and the value of M may be determined according to the length of the CP corresponding to the OFDM symbol, for example, may be determined according to Table 1 below.

Table 1

| CP length | Number M of OOK symbols |
|---|---|
| 1/4 * T1 | 2 |
| 1/8 * T1 | 4 |
| 1/16 * T1 | 8 |
| 1/32 * T1 | 16 |

T1 denotes the time domain length of the OFDM symbol, and T1 may be a time length. For example, T1 = 1/15000 = 66.7 microseconds ($\mu$s) or T1 = 1/30000 = 33.3 $\mu$s.

In some other embodiments of the present application, the case where the first-type symbols are OOK symbols is used as an example, the value of M is determined according to the CP. The CP length may be determined in units of the numbers of sampling points, and further, the number M of OOK symbols is determined. The correspondence between the CP length and the number M of OOK symbols may be shown in Table 2 below.

Table 2

| CP length (in units of numbers of sampling points) | Number M of OOK symbols |
|---|---|
| 512 | 2 |
| 256 | 4 |
| 128 | 8 |
| 64 | 16 |

The time domain length of the OFDM symbol is measured by the number of sampling points in time domain. For example, the value of T1 may be one of 128, 256, 512, 1024, 2048, or 4096. Then, the specific time domain length of the OFDM symbol is determined according to the time length Ts of each time domain sampling point. In this embodiment, when T1 = 2048 and Ts = 1/30.72 MHz = 32.55 nanoseconds (ns), the time domain length of the OFDM symbol is 2048*Ts=66.7 $\mu$s. In the embodiments of the present application, the number M of OOK symbols is determined according to the CP length of the OFDM symbol. For example, when the CP length is 128 Ts, the value of M is 8.

In some embodiments of the present application, the time domain positions of M OOK symbols are located in one OFDM symbol, and the value of M is determined according to the OFDM symbol length and the CP length corresponding to the OFDM symbol. The correspondence between the CP length of the OFDM symbol and the number M of OOK symbols may be shown in Table 3 below.

Table 3

| CP length (in units of numbers of sampling points) | OFDM symbol length (in units of numbers of sampling points) | Number M of OOK symbols |
|---|---|---|
| 512 | 2048 | 2 |
| 256 | 2048 | 4 |
| 128 | 2048 | 8 |

(continued)

| CP length (in units of numbers of sampling points) | OFDM symbol length (in units of numbers of sampling points) | Number M of OOK symbols |
|---|---|---|
| 64 | 2048 | 16 |
| 512 | 1024 | 1 |
| 256 | 1024 | 2 |
| 128 | 1024 | 4 |
| 64 | 1024 | 8 |

The time domain length of the OFDM symbol is measured by the number of sampling points in time domain. For example, the value of T1 may be one of 128, 256, 512, 1024, 2048, or 4096. Then, the specific time domain length of the OFDM symbol is determined according to the time length Ts of each time domain sampling point. In the embodiments of the present application, when T1 = 2048 and Ts = 1/30.72 MHz = 32.55 ns, the time domain length of the OFDM symbol is 2048*Ts=66.7 μs. Specifically, when the CP length of the OFDM symbol is 128 Ts and the length of the OFDM symbol is 2048 Ts, it can be determined from Table 3 that the value of M is 8.

In some embodiments of the present application, when it is determined according to the CP length that the number M of OOK symbols has multiple values, the position of the value of M among the multiple values is further indicated through signaling.

In some other embodiments of the present application, the value of the OFDM symbol length and/or the value of the CP length may be directly indicated through signaling, or the value of the OFDM symbol length and/or the value of the CP length may be indicated in a mapping manner, and the mapping manner includes at least one of the following:

The value of the OFDM symbol length and/or the value of the CP length is determined according to the SCS corresponding to the OFDM symbol.

The value of the OFDM symbol length and/or the value of the CP length is determined according to the system frequency-domain bandwidth corresponding to the OFDM symbol.

The value of the OFDM symbol length and/or the value of the CP length is determined according to the size of the bandwidth part (BWP) corresponding to the OFDM symbol.

The BWP is a subset or a part of the entire system frequency-domain bandwidth and may form a group of consecutive common resource blocks (CRBs) in the entire frequency-domain bandwidth. That is, within the entire frequency-domain bandwidth, the BWP starts from a CRB and spans a group of consecutive CRBs, and each BWP is associated with its own parameter set (including the SCS and the CP length).

FIG. 2 is another flowchart of a message sending method according to an embodiment of the present application. The embodiment of the present application may be applied to the transmission of LP-WUSs. Referring to FIG. 2, the message sending method provided in the embodiments of the present application includes the following operation 210.

In the operation 210, a first message is sent, where the first message occupies at least P first-type symbols in time domain, and P is an integer greater than or equal to 1.

In some embodiments of the present application, M first-type symbols among the at least P first-type symbols carry first data information $S_{M1}$ with a length of M1, and the first data information $S_{M1}$ includes M1 elements, where M is an integer less than or equal to P, and M1 is an integer greater than or equal to 1.

In the embodiments of the present application, the M first-type symbols among the at least P first-type symbols occupied by the first message carry the first data information $S_{M1}$, and the first data information $S_{M1}$ includes M1 elements, where the value of M1 may be less than or equal to the value of M, that is, the length M1 of the first data information $S_{M1}$ sent by the M first-type symbols may be less than or equal to M. In addition, in some embodiments of the present application, the length M1 of the first data information may be greater than M.

In some embodiments of the present application, the message sending method provided in the embodiments of the present application further includes: generating the first data information $S_{M1}$ based on third data information $H_{m1}$, where M1 is an integer greater than or equal to 1.

Specifically, the original data information to be sent on the M first-type symbols is the third data information $H_{m1}$, it can be defined that $H_{M1} = [h_0, h_1, h_2, h_3..., h_{M1-1}]$, and each element $h_i$ in the original data information $H_{M1}$ is processed, that is, $h_i$ is converted into an element $s_i$ in the first data information $S_{M1}$, where $0 \leq i \leq M1 - 1$. After processing, the first data information $S_{M1} = [s_0, s_1, s_2, s_3..., s_{M1-1}]$ is generated.

In some embodiments of the present application, $h_i$ is converted into the element $s_i$ according to the following expression:

$$h_i = s_i \oplus r_i.$$

Herein, $\oplus$ denotes the mathematical operator of the modulo-2 addition operation, and the value of $r_i$ is taken from the output of a shift register.

In some embodiments of the present application, the message sending method further includes repeating each element in the first data information $S_{M1}$ at least once to form second data information $Q_K$, where the length of the second data information $Q_K$ is K.

In the embodiments of the present application, the first data information $S_{M1}$ may not be sent directly, and the first data information $S_{M1}$ may be processed to generate the second data information $Q_K$ by repeating each element in the first data information $S_{M1}$ to form the second data information $Q_K$. It is to be understood that the number of repetition times of each element in the first data information may be the same with or different from each other.

In some embodiments of the present application, the sum of the number of repetition times of each element in the second data information $Q_K$ is K.

In the embodiments of the present application, the sum of the number of repetition times of each element in the second data information $Q_K$ may be K, that is, the sum of the number of repetition times of each element forming the second data information $Q_K$ may be K, and correspondingly, the length of the second data information $Q_K$ may be K.

In some embodiments of the present application, the number of repetition times of each element in the second data information $Q_K$ is the same or independently configured.

In the embodiments of the present application, each element in the first data information $S_{M1}$ is repeated to form the second data information $Q_K$, where the number of repetition times of each element in the first data information $S_{M1}$ may be the same or may be independently configured.

In some embodiments of the present application, a value of an element in the first data information $S_{M1}$ determines the number of repetition times of the element in the second data information $Q_K$.

Specifically, the value of the element in the first data information $S_{M1}$ may determine the number of repetition times of the element for forming the second data information $Q_K$.

In some embodiments of the present application, the first number of repetition times of an element with the value being 1 is greater than the second number of repetition times of an element with the value being 0.

In the embodiments of the present application, the value of an element in the first data information may be 1 or 0. When forming the second data information, the number of repetition times of the element with the value being 1 is greater than the number of repetition times of the element with the value being 0.

In some other embodiments of the present application, the first number of repetition times of an element with the value being 1 is C times of the second number of repetition times of an element with the value being 0, where C is an integer greater than or equal to 0.

Specifically, the value of the element in the first data information may be 1 or 0. When the second data information is formed, the number of repetition times of the element with the value being 1 is C times of the number of repetition times with the value being 0.

In an example embodiment, referring to FIG. 3, the LP-WUS occupies at least P OOK symbols in time domain, where P is an integer greater than or equal to 1; and M OOK symbols may carry the first data information $S_{M1}$ with a length of M1, and the first data information $S_{M1}$ is defined as $S_{M1} = [s_0, s_1, s_2, s_3...,s_{M1-1}]$. In some embodiments, M1 = M, and correspondingly, each OOK symbol among the M OOK symbols is used to send an element in $S_{M1}$. Each element in $S_{M1}$ is repeated at least once to form the second data information $Q_K$, where the length of $Q_K$ is K. For example, $Q_K$ is defined as the following:

$$Q_K = [\underbrace{s_0, s_0, \cdots, s_0}_{A_0}, \underbrace{s_1, s_1, \cdots, s_1}_{A_1}, \ldots, \underbrace{s_{M-1}, s_{M-1}, \cdots, s_{M-1}}_{A_{M-1}}],$$

where

$$A_0 + A_1 + \cdots + A_{M-1} = K.$$

Further, the elements in the set $[A_0, A_1, A_2, ... , A_{M-1}]$ have the same value or different values, or the values of the elements each are independently configured. That is, when the second data information is formed based on the first data information, the number of repetition times of each element in the first data information may be the same with or different from each other, and the number of repetition times of each element in the first data information may be independently configured.

Furthermore, the corresponding value of $A_i$ when the value of $s_i$ is 1 is greater than the corresponding value of $A_i$ when the value of $s_i$ is 0.

Furthermore, the corresponding value of $A_i$ when the value of $s_i$ is 1 is C times of the corresponding value of $A_i$ when the value of $s_i$ is 0, where C is greater than or equal to 0.

In another example embodiment, referring to FIG. 4, the LP WUS occupies at least P OOK symbols in time domain. P is an integer greater than or equal to 1. The time domain positions of M OOK symbols among the at least P OOK symbols in time domain are included in one OFDM symbol in time domain. The operations performed on the M OOK symbols are described below.

The data information sent on the M OOK symbols is $S_M$ defined as $S_M = [s_0, s_1, s_2, s_3...,s_{M-1}]$, the length of $S_M$ is M, and $S_M$ is converted into the data information $Q_K$ according to the formula below, where the length of $Q_K$ is K:

$$Q_K = [\underbrace{s_0, s_0, \cdots, s_0}_{A_0}, \underbrace{s_1, s_1, \cdots, s_1}_{A_1}, \ldots, \underbrace{s_{M-1}, s_{M-1}, \cdots, s_{M-1}}_{A_{M-1}}],$$

where

$$A_0 + A_1 + \cdots + A_{M-1} = K.$$

Further, the values of the elements in $[A_0 \, A_1 \, A_2 \ldots A_{M-1}]$ are the same or different, or the values of the elements are independently configured.

In the embodiments of the present application, the corresponding value of $A_i$ when the value of $s_i$ is 1 is twice the corresponding value of $A_i$ when the value of $s_i$ is 0.

In some embodiments of the present application, the message sending method further includes converting each element in the first data information $S_{M1}$ into at least two sub-elements; and repeating the at least two sub-elements of each element in the first data information $S_{M1}$ to form second data information $Q_K$, where the length of the second data information $Q_K$ is K.

In the embodiments of the present application, each element in the first data information may be converted into at least two sub-elements. The converted first data information may be referred to as third data information, and the length of the third data information may be M2. It is to be understood that the value of M2 may be greater than the length M1 of the first data information. In some embodiments of the present application, when each element in the first data information is converted into two sub-elements, the length M2 of the third data information may be twice the length M1 of the first data information. The sub-elements may be repeated to form the second data information $Q_K$, and the numbers of repetition times of the sub-elements may be different. It is to be understood that repeating each sub-element may refer to repeating sending each sub-element once, and repeating each sub-element multiple times may refer to repeating sending each sub-element for multiple times, rather than that the second data information $Q_K$ have multiple repeated sub-elements.

In some embodiments of the present application, the number of repetition times of each sub-element is the same or independently configured.

In the embodiments of the present application, to form the second data information, the number of repetition times of each sub-element in the first data information may be same with or different from each other, or the number of repetition times of each sub-element in the first data information may be independently configured.

In some embodiments of the present application, the at least two sub-elements include a first sub-element and a second sub-element, and the values of all the first sub-elements in the second data information $Q_K$ are 0.

In the embodiments of the present application, to form the second data information, the values of all the first sub-elements converted from elements in the first data information may be 0.

In some embodiments of the present application, the at least two sub-elements include a first sub-element and a second sub-element, and a value of each second sub-element in the second data information $Q_K$ is a value of a corresponding first sub-element or is determined according to a value of a corresponding element.

Specifically, each element in the first data information may be converted into the first sub-element and the second sub-element, where the value of each second sub-element may be the value of the corresponding first sub-element in the first data information or may be determined according to the value of the corresponding element.

In some example embodiments, the LP WUS occupies at least P OOK symbols in time domain, where P is an integer greater than or equal to 1. The data information with a length of M sent on M OOK symbols is $S_M$ defined as $S_M = [s_0, s_1, s_2, s_3...,s_{M-1}]$, that is, an element in $S_M$ is sent on each OOK symbol among the M OOK symbols. Each element $s_i$ ($0 \le i \le$ M - 1) in $S_M$ is converted into $[y_i, x_i]$, $y_i$ is repeated for $A_i$ times, and $x_i$ is repeated for $B_i$ times, thereby forming the data information $Q_K$, where the length of $Q_K$ is K. That is,

$$Q_K = [\underbrace{y_0, y_0, \cdots, y_0}_{A_0}, \underbrace{x_0, x_0, \cdots, x_0}_{B_0}, \underbrace{y_1, y_1, \cdots, y_1}_{A_1}, \underbrace{x_1, x_1, \cdots, x_1}_{B_1}, \ldots, \underbrace{y_{M-1}, y_{M-1}, \cdots, y_{M-1}}_{A_{M-1}}, \underbrace{x_{M-1}, x_{M-1}, \cdots, x_{M-1}}_{B_{M-1}}],$$

where

$$(A_0 + A_1 + \cdots + A_{M-1}) + (B_0 + B_1 + \cdots + B_{M-1}) = K.$$

In some embodiments of the present application, $B_0 = B_1 = \cdots = B_{M-1}$, that is, the number of repetition times of each of the second sub-elements may be the same.

In some other embodiments of the present application, $x_0 = x_1 = \cdots = x_{M-1} = 0$, that is, the values of all the first sub-elements generated through the conversion may be 0.

In some other embodiments of the present application, $y_i = s_i$, that is, the value of the second sub-element generated through the conversion may be the value of the element corresponding to the second sub-element.

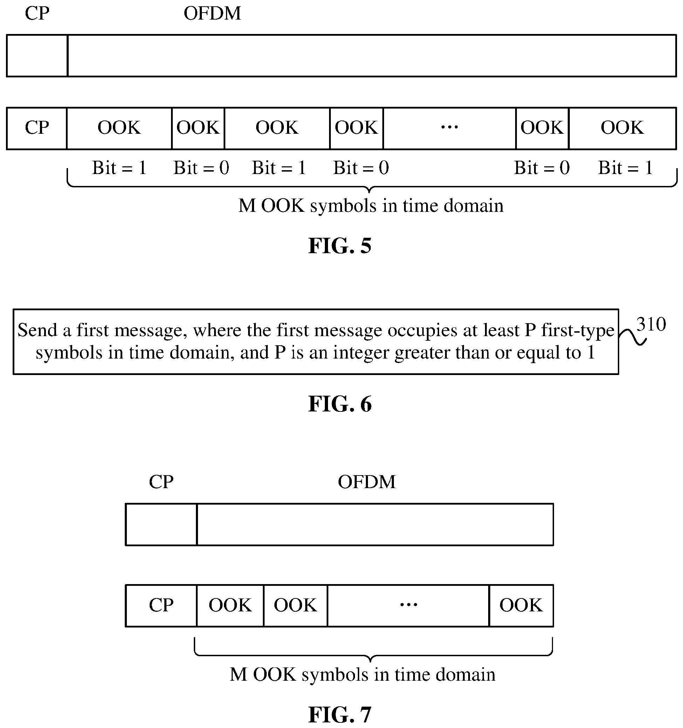

In an example embodiment, referring to FIG. 5, the LP WUS occupies at least P OOK symbols in time domain. P is an integer greater than or equal to 1. The time domain positions of M (M is an integer greater than or equal to 0) OOK symbols are included in one OFDM symbol. The operations performed on the M OOK symbols include the following:

(1) The first data information sent on the M OOK symbols is $S_M$, $S_M = [s_0, s_1, s_2, s_3..., s_{M-1}]$ is defined, and the length of $S_M$ is M.

(2) Each element $s_i$ ($0 \leq i \leq M - 1$) in $S_M$ is converted into $[s_i\ 0]$, $s_i$ is repeated for $A_i$ times, 0 is repeated for B times, and the data information $Q_K$ is formed, where the length of $Q_k$ is K, that is,

$$Q_K = [\underbrace{s_0, s_0, \cdots, s_0}_{A_0}, \underbrace{0, 0, \cdots, 0}_{B}, \underbrace{s_1, s_1, \cdots, s_1}_{A_1}, \underbrace{0, 0, \cdots, 0}_{B}, \ldots, \underbrace{s_{M-1}, s_{M-1}, \cdots, s_{M-1}}_{A_{M-1}} \underbrace{0, 0, \cdots, 0}_{B}, ],$$

where

$$(A_0 + A_1 + \cdots + A_{M-1}) + B * M = K.$$

In the embodiments of the present application, the corresponding value of $A_i$ when the value of $s_i$ is 1 is twice the corresponding value of $A_i$ when the value of $s_i$ is 0.

FIG. 6 is another flowchart of a message sending method according to an embodiment of the present application. The embodiment of the present application may be applied to the transmission of LP-WUSs. Referring to FIG. 6, the message sending method provided in the embodiments of the present application specifically includes the following operation 310:

In the operation 310, a first message is sent, where the first message occupies at least P first-type symbols in time domain, and P is an integer greater than or equal to 1.

In the embodiments of the present application, M first-type symbols among the at least P first-type symbols carry first data information $S_{M1}$ with a length of M1, and the message sending method further includes the following.

Second data information $Q_K$ is formed according to the first data information $S_{M1}$, where the first data information $S_{M1}$ includes M1 elements, and the length of the second data information $Q_K$ is K; and the second data information $Q_K$ is scrambled with scrambling code information.

In the embodiments of the present application, M first-type symbols among P first-type symbols may carry the first data information $S_{M1}$ with a length of M1, the first data information may form the second data information $Q_K$, and the second data information $Q_K$ may be scrambled.

In some embodiments of the present application, that the second data information $Q_K$ is formed according to the first data information $S_{M1}$ includes at least one of the following:

each element in the first data information $S_{M1}$ is repeated at least once to form the second data information $Q_K$; or,
each element in the first data information $S_{M1}$ is converted into at least two sub-elements, and the at least two sub-elements are repeated to form the second data information $Q_K$.

For example, the LP-WUS occupies at least P OOK symbols in time domain, where P is an integer greater than or equal to 1. The Data information with a length of M sent on M OOK symbols is $S_M$. It is to be understood that in some embodiments of the present application, the length of the first data information may be M1, the value of M1 may be less than or equal to M, and $S_M$ is defined as $S_M = [s_0, s_1, s_2, s_3..., s_{M-1}]$, that is, an element in $S_M$ is sent on each OOK symbol among the M OOK symbols.

Each element in $S_M$ may be repeated at least once to form the second data information $Q_K$, where the length of $Q_K$ is K. For example, $Q_K$ is defined as:

$$Q_K = [\underbrace{s_0, s_0, \cdots, s_0}_{A_0}, \underbrace{s_1, s_1, \cdots, s_1}_{A_1}, \ldots, \underbrace{s_{M-1}, s_{M-1}, \cdots, s_{M-1}}_{A_{M-1}}],$$

where

$$A_0 + A_1 + \cdots + A_{M-1} = K.$$

Alternatively, each element $s_i$ ($0 \le i \le M - 1$) in $S_M$ is converted into $[y_i, x_i]$, $y_i$ is repeated for $A_i$ times, and $x_i$ is repeated for $B_i$ times; and the data information $Q_K$ is formed, where the length of $Q_k$ is K. That is:

$$Q_K = [\underbrace{y_0, y_0, \cdots, y_0}_{A_0}, \underbrace{x_0, x_0, \cdots, x_0}_{B_0}, \underbrace{y_1, y_1, \cdots, y_1}_{A_1}, \underbrace{x_1, x_1, \cdots, x_1}_{B_1}, \ldots, \underbrace{y_{M-1}, y_{M-1}, \cdots, y_{M-1}}_{A_{M-1}}, \underbrace{x_{M-1}, x_{M-1}, \cdots, x_{M-1}}_{B_{M-1}}],..$$

where

$$(A_0 + A_1 + \cdots + A_{M-1}) + (B_0 + B_1 + \cdots + B_{M-1}) = K.$$

In some embodiments of the present application, elements in the second data information $Q_K$ corresponding to a same first-type symbol are scrambled with same scrambling code information; or, elements in the second data information $Q_K$ and corresponding to a same element in the first data information $S_{M1}$ are scrambled with same scrambling code information.

In the embodiments of the present application, elements in the second data information $Q_K$ and corresponding to the same first-type symbol may be scrambled with the same scrambling code information. Alternatively, elements that are in the second data information $Q_K$ and are generated through the same element in the first data information $S_{M1}$ are scrambled with the same scrambling code information.

In some embodiments of the present application, elements in the second data information $Q_K$ corresponding to different first-type symbols are scrambled with scrambling code information generated in at least one of the following manners: the scrambling code information is determined based on a predetermined formula, the scrambling code information is independently generated; or, the scrambling code information is generated based on a predetermined principle.

Specifically, the scrambling code information for scrambling the elements that are in the second data information $Q_K$ and do not correspond to the same first-type symbol may be generated in one or more of the following manners: determining the scrambling code information based on a predetermined formula, independently generating the scrambling code information, or generating the scrambling code information based on a predetermined principle.

In some embodiments of the present application, elements in the second data information $Q_K$ corresponding to different elements in the first data information $S_{M1}$ are scrambled with scrambling code information generated in at least one of the following manners: the scrambling code information is determined based on a predetermined formula, the scrambling code information is independently generated; or, the scrambling code information is generated based on a predetermined principle.

Specifically, the scrambling code information for scrambling the elements in the second data information $Q_K$ and corresponding to different elements in the first data information $S_{M1}$ may be generated in one or more of the following manners: determining the scrambling code information based on a predetermined formula, independently generating the scrambling code information, or generating the scrambling code information based on a predetermined principle.

In some embodiments of the present application, the scrambling code information includes at least one of the following: scrambling code parameters or a scrambling code parameter set.

In the embodiments of the present application, the scrambling code information may be separate scrambling code parameters or a scrambling code parameter set composed of at least two scrambling code parameters.

In some embodiments of the present application, the number of the scrambling code parameters in the scrambling code parameter set is the same as the number of all the elements in the second data information $Q_K$ or the total number of all the sub-elements in the second data information $Q_K$.

Specifically, in the case where the scrambling code information is a scrambling code parameter set, the number of the scrambling code parameters in the scrambling code parameter set is equal to the number of all the elements in the second data information $Q_K$ or is equal to the total number of all the sub-elements in the second data information $Q_K$.

In an example embodiment, the LP-WUS occupies at least P OOK symbols in time domain, where P is an integer greater than or equal to 1. The data information with a length of M sent on M OOK symbols is $S_M$, and $S_M = [s_0, s_1, s_2, s_3 \ldots, s_{M-1}]$ is defined, that is, an element in $S_M$ is sent on each OOK symbol among the M OOK symbols.

Sending of each element in $S_{M1}$ may be repeated at least once to form the second data information $Q_K$, where the length of $Q_K$ is K. For example, $Q_K$ is defined as below:

$$Q_K = [\underbrace{s_0, s_0, \cdots, s_0}_{A_0}, \underbrace{s_1, s_1, \cdots, s_1}_{A_1}, \ldots, \underbrace{s_{M-1}, s_{M-1}, \cdots, s_{M-1}}_{A_{M-1}}],$$

where $A_0 + A_1 + \cdots + A_{M-1} = K$, the element that is in the data information $Q_K$ and corresponds to the i-th OOK symbol may be denoted as $Q_K^i$, the corresponding scrambling code information is $w_i$, and $Q_K^i$ is converted into $WQ_K^i$ according to the formula below:

$$WQ_K^i = w_i * Q_K^i,$$

where

$$Q_K^i = [\underbrace{s_i, s_i, \cdots, s_i}_{A_i}] \quad \text{or} \quad Q_K^i = [\underbrace{y_i, y_i, \cdots, y_i}_{A_i}, \underbrace{x_i, x_i, \cdots, x_i}_{B_i}].$$

The scrambling code information corresponding to the elements in the data information $Q_K$ corresponding to the same OOK symbol is the same, which is $w_i$.

Scrambling code information for the elements in the data information $Q_K$ corresponding to different OOK symbols may be generated in at least one of the following manners: generated based on a predetermined formula, generated independently, or generated based on a predetermined principle.

In some embodiments of the present application, scrambling code information for scrambling elements in the second data information $Q_K$ corresponding to a same first-type symbol are independently configured, determined based on a predetermined formula, or generated based on a predetermined principle. Alternatively, scrambling code information for scrambling elements in the second data information $Q_K$ and corresponding to a same element in the first data information $S_{M1}$ are independently configured, determined based on a predetermined formula, or generated based on a predetermined principle.

Specifically, the elements in the second data information QK may be scrambled with different scrambling code information. It is to be understood that different scrambling code information may be adopted for the elements in the second data information QK corresponding to the same first-type symbol.

In an example embodiment, the scrambling code information is $P_i = [\underbrace{p_0, p_1, \cdots, p_{A_i+B_i-1}}_{A_i+B_i}]$, and $Q_K^i$ is converted into $PQ_K^i$ according to the formula below:

$$PQ_K^i = [\underbrace{p_0 * y_i, p_1 * y_i, \cdots, p_{A_i-1} * y_i, p_{A_i} * x_i, p_{A_i+1} * x_i, \cdots, p_{A_i+B_i-1} * x_i}_{A_i+B_i}],$$

where $Q_K^i = [\underbrace{y_i, y_i, \cdots, y_i}_{A_i}, \underbrace{x_i, x_i, \cdots, x_i}_{B_i}]$, and where scrambling code information for scrambling the elements in the data information $Q_K$ corresponding to different OOK symbols may be generated in at least one of the following manners: generated based on a predetermined formula, generated independently, or generated based on a predetermined principle.

In some other embodiments of the present application, the generation process of the second data information $Q_K$ may be described below.

Each element $s_i$ ($0 \le i \le M - 1$) in $S_M$ is converted into $[y_i, x_i]$, $y_i$ is repeated $A_i$ times, and $x_i$ is repeated $B_i$ times, thereby forming the data information $Q_K$, where the length of $Q_K$ is K. That is

$$Q_K = [\underbrace{y_0, y_0, \cdots, y_0}_{A_0}, \underbrace{x_0, x_0, \cdots, x_0}_{B_0}, \underbrace{y_1, y_1, \cdots, y_1}_{A_1}, \underbrace{x_1, x_1, \cdots, x_1}_{B_1}, \cdots,$$

$$\underbrace{y_{M-1}, y_{M-1}, \cdots, y_{M-1}}_{A_{M-1}}, \underbrace{x_{M-1}, x_{M-1}, \cdots, x_{M-1}}_{B_{M-1}}],$$

where

$$(A_0 + A_1 + \cdots + A_{M-1}) + (B_0 + B_1 + \cdots + B_{M-1}) = K.$$

The scrambling code information is $P_i = [\underbrace{p_0, p_1, \cdots, p_{A_i+B_i-1}}_{A_i+B_i}]$ , and $Q_K^i$ is converted into $PQ_K^i$ according to the formula below:

$$PQ_K^i = [\underbrace{p_0 * y_i, p_1 * y_i, \cdots, p_{A_i-1} * y_i, p_{A_i} * x_i, p_{A_i+1} * x_i, \cdots, p_{A_i+B_i-1} * x_i}_{A_i+B_i}],$$

where $Q_K^i = [\underbrace{y_i, y_i, \cdots, y_i}_{A_i}, \underbrace{x_i, x_i, \cdots, x_i}_{B_i}]$ , and where scrambling code information for scrambling the elements in the data information $Q_K$ corresponding to different OOK symbols may be generated in at least one of the following manners: generated based on a predetermined formula, generated independently, or generated based on a predetermined principle.

In an example embodiment, referring to FIG. 7, the LP-WUS occupies at least P OOK symbols in time domain, where P is an integer greater than or equal to 1. The time domain positions of M OOK symbols are included in one OFDM symbol, where M is an integer greater than or equal to 0. The data information sent on the M OOK symbols is $S_M$ defined as $S_M = [s_0, s_1, s_2, s_3..., s_{M-1}]$, and the length of $S_M$ is M.

The first data information $S_M$ may be converted into the second data information $Q_K$ according to the solutions described in any of the preceding embodiments.

The element in the second data information $Q_K$ corresponding to the i-th OOK symbol, that is, $Q_K^i$, may be converted into $WQ_K^i$ or $PQ_K^i$, for implementing scrambling.

Then, the following operation is performed on $WQ_K^i$ or $PQ_K^i$:

(1) $WQ_K^i$ or $PQ_K^i$ corresponding to the M OOK symbols are combined into one piece of data information, which is defined as $WQ_K$ or $PQ_K$, that is:

$$WQ_K = [WQ_K^0, WQ_K^1, \cdots, WQ_K^{M-1}];$$

and

$$PQ_K = [PQ_K^0, PQ_K^1, \cdots, WQ_K^{M-1}].$$

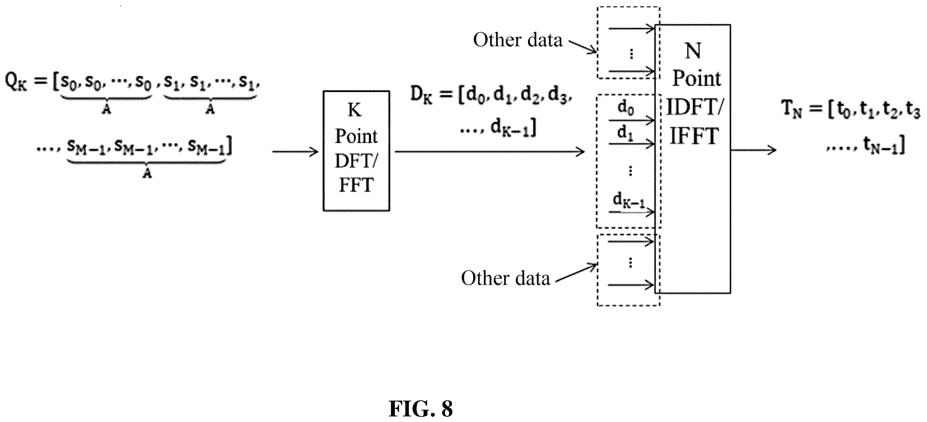

In some other embodiments of the present application, referring to FIG. 8, M OOK symbols may be generated within the OFDM symbol, specifically including the following operations:

1. the K point discrete Fourier transform (DFT) or fast Fourier transform (FFT) is performed on the data information $Q_K$, thereby obtaining the data information $D_K = [d_0, d_1, d_2, d_3, ..., d_{K-1}]$;

2. the data information $D_K$ is filled into K OFDM subcarriers corresponding to the LP-WUS in the frequency domain; and

3. in the system frequency-domain bandwidth, in addition to the LP-WUS occupying K OFDM subcarriers, other data information may be filled into other subcarriers, and thus, when the system frequency-domain bandwidth includes N OFDM subcarriers, the N point inverse DFT (IDFT) or inverse FFT (IFFT) is performed on the data filled into the N subcarriers, thereby obtaining time domain data $T_N = [t_0, t_1, t_2, t_3,..., t_{N-1}]$ of N sampling points.

When there is no other data sent in the system except for the LP-WUS, $T_N = [t_0, t_1, t_2, t_3,...,t_{N-1}]$ is the sampling point data of M OOK symbols in time domain. $[t_0, t_1, t_2, t_3,...,t_{N/M-1}]$ is the sampling point data of the first one among the M OOK symbols in time domain; $[t_{N/M}, t_{N/M+1}, ..., t_{2N/M-1}]$ is the sampling point data of the second one among the M OOK symbols in time domain; and by analogy, $[t_{(M-1)N/M}, t_{(M-1)N/M+1},..., t_{N-1}]$ is the sampling point data of the M-th one among the M OOK symbols in time domain.

When there is other data sent in the system in addition to the LP-WUS, $T_N = [t_0, t_1, t_2, t_3,...,t_{N-1}]$ is the superposition expression of the sampling point data of the symbols in time domain of the LP-WUS and other data. The sampling point data of the first one among the M OOK symbols in time domain is included in $[t_0, t_1, t_2, t_3,...,t_{N/M-1}]$; the sampling point data of the second one among the M OOK symbols in time domain is included in $[t_{N/M}, t_{N/M+1},..., t_{2N/M-1}]$; and by analogy, the sampling point data of the M-th one among the M OOK symbols in time domain is included in $[t_{(M-1)N/M}, t_{(M-1)N/M+1}, ..., t_{N-1}]$.

In addition, the CP needs to be added to the time domain data $T_N = [t_0, t_1, t_2, t_3, ..., t_{N-1}]$ of N sampling points before the data is sent, that is, $N_{cp}$ pieces of sampling point information at the tail of the time domain data $T_N$ of the N sampling points are replicated to the head of the time domain data $T_N$ of the N sampling points, thereby forming the time domain data of $(N+N_{cp})$ sampling points and then sending the time domain data of these $(N+N_{cp})$ sampling points.

In some embodiments of the present application, the data information with a length of M1 carried on M OOK symbols is $S_{M1}$ defined as $S_{M1} = [s_0, s_1, s_2, s_3...,s_{M1-1}]$, and then $S_{M1}$ is used to generate $Q_K$ in the manner below:

$$Q_K = [\underbrace{f_0, f_0, \cdots, f_0}_{A_0^1}, \underbrace{s_0, s_0, \cdots, s_0}_{A_0^2}, \underbrace{f_1, f_1, \cdots, f_1}_{A_1^1}, \underbrace{s_1, s_1, \cdots, s_1}_{A_1^2}, ...,$$

$$\underbrace{f_{M1-1}, f_{M1-1}, \cdots, f_{M1-1}}_{A_{M1-1}^1}, \underbrace{s_{M1-1}, s_{M1-1}, \cdots, s_{M1-1}}_{A_{M1-1}^2}],$$

Where

$$A_i^1 + A_i^2 = A_i, \ 0 \leq i \leq M1 - 1, \text{ and } A_0 + A_1 + \cdots + A_{M1-1} = K.$$

In some embodiments of the present application, the value of each element in $\left[A_0^1, A_1^1, \cdots, A_{M1-1}^1\right]$ is the same or independently configured.

In some embodiments of the present application, the value of each element in $\left[A_0^2, A_1^2, \cdots, A_{M1-1}^2\right]$ is the same or independently configured.

In some embodiments of the present application, the value of $f_i$ is 0, where $0 \leq i \leq M1 - 1$. Correspondingly, the second data information $Q_K$ is defined as:

$$Q_K = [\underbrace{0,0,\cdots,0}_{A_0^1} \underbrace{s_0, s_0, \cdots, s_0}_{A_0^2}, \underbrace{0,0,\cdots,0}_{A_1^1} \underbrace{s_1, s_1, \cdots, s_1}_{A_1^2},..., \underbrace{0,0,\cdots,0}_{A_{M1-1}^1} \underbrace{s_{M1-1}, s_{M1-1}, \cdots, s_{M1-1}}_{A_{M1-1}^2}].$$

In some embodiments of the present application, when the value of $s_{i-1}$ is not 0, the value of $A_i^1$ is greater than or equal to 1, where $1 \leq i \leq M1 - 1$.

In some embodiments of the present application, the value of $f_i$ is 0 or $s_i$.

Specifically, $A_i^1 \ f_i$ is equivalent to the CP and is added before $A_i^2 \ s_i$, to ensure that in the case where the multipath effect exists in the channel, the transmission of data information $s_{i-1}$ does not cause the inter-symbol interference (ISI) on the reception of its subsequent data information $s_i$.

In some embodiments of the present application, when the value of $s_{i-1}$ is 0, the value of $f_i$ is equal to 0.

In some embodiments of the present application, when i = 0, the value of $A_0^1$ is equal to 0.

Specifically, the CP does not need to be added before $s_0$.

Based on the preceding embodiments of the present application, the value of $A_i^1$ is configured in at least one of the following manners: for different values of i, the value of $A_i^1$ is independently configured; the value of $A_i^1$ is configured by the system; the value of $A_i^1$ is configured by the signaling; the value of $A_i^1$ is determined according to the CP length of the OFDM symbol; the value of $A_i^1$ is determined according to the length of the OFDM symbol; the value of $A_i^1$ is determined according to the SCS corresponding to the OFDM symbol; the value of $A_i^1$ is determined according to the system frequency-domain bandwidth corresponding to the OFDM symbol; or, the value of $A_i^1$ is determined according to the BWP size corresponding to the OFDM symbol.

In the embodiments of the present application, the BWP is a subset or a part of the entire frequency-domain bandwidth of system. The BWP forms a group of consecutive CRBs in the entire frequency-domain bandwidth. That is, within the entire frequency-domain bandwidth, the BWP starts from a CRB and spans a group of consecutive CRBs. Each BWP is associated with its own parameter set (including the SCS and the CP length).

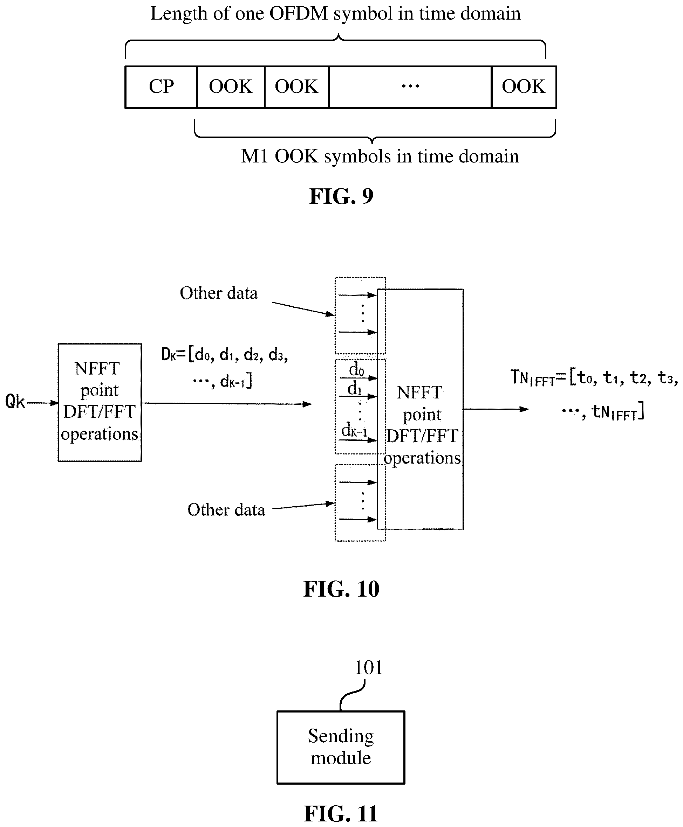

In an example embodiment, referring to FIG. 9, the time domain positions of M1 OOK symbols are located in one OFDM symbol, the CP length of the OFDM symbol is $N_{CP}$ sampling points in time domain, and the system bandwidth corresponding to the OFDM symbol is $N_{IFFT}$ subcarriers. The bandwidth occupied by the OOK symbols in the frequency domain is $N_{FFT}$ subcarriers.

In this embodiment, the data information with a length of M1 sent on the M1 OOK symbols is $S_{M1}$ defined as $S_{M1} = [s_0, s_1, s_2, s_3 ..., s_{M1-1}]$, and $S_{M1}$ is used to generate $Q_K$ in the manners below:

$$Q_K = [\underbrace{f_0, f_0, \cdots, f_0,}_{A_0^1} \underbrace{s_0, s_0, \cdots, s_0}_{A_0^2}, \underbrace{f_1, f_1, \cdots, f_1,}_{A_1^1} \underbrace{s_1, s_1, \cdots, s_1,}_{A_1^2}$$

$$\cdots, \underbrace{f_{M1-1}, f_{M1-1}, \cdots, f_{M1-1},}_{A_{M1-1}^1} \underbrace{s_{M1-1}, s_{M1-1}, \cdots, s_{M1-1}}_{A_{M1-1}^2} ].$$

In this embodiment, the values of the elements in $[A_0^1, A_1^1, \cdots, A_{M1-1}^1]$ are the same and are all equal to $A^1$, the values of the elements in $[A_0^2, A_1^2, \cdots, A_{M1-1}^2]$ are the same and are all equal to $A^2$, and the expression of $Q_K$ is described as:

$$Q_K = [\underbrace{f_0, f_0, \cdots, f_0,}_{A^1} \underbrace{s_0, s_0, \cdots, s_0}_{A^2}, \underbrace{f_1, f_1, \cdots, f_1,}_{A^1} \underbrace{s_1, s_1, \cdots, s_1,}_{A^2}$$

$$\cdots, \underbrace{f_{M1-1}, f_{M1-1}, \cdots, f_{M1-1},}_{A^1} \underbrace{s_{M1-1}, s_{M1-1}, \cdots, s_{M1-1}}_{A^2} ],$$

where the value of K is equal to $N_{FFT}$.

In this embodiment, the value of $A^1$ is calculated according to the following formula:

$$A^1 = \frac{N_{FFT}/M1}{N_{IFFT}} * N_{CP}.$$

In this embodiment, the value of $A^2$ is calculated according to the following formula:

$$A^2 = N_{FFT}/M1 - A^1.$$

In embodiments other than this embodiment, the value of $A^1$ may be calculated according to one of the following formulas:

$$A^1 = \frac{\lfloor N_{FFT}/M1 \rfloor}{N_{IFFT}} * N_{CP},$$

$$A^1 = \frac{\lceil N_{FFT}/M1 \rceil}{N_{IFFT}} * N_{CP},$$

$$A^1 = \left\lfloor \frac{N_{FFT}/M1}{N_{IFFT}} * N_{CP} \right\rfloor,$$

$$A^1 = \left\lceil \frac{N_{FFT}/M1}{N_{IFFT}} * N_{CP} \right\rceil,$$

$$A^1 = \left\lfloor \frac{N_{FFT}/M1}{N_{IFFT}} \right\rfloor * N_{CP},$$

or,

$$A^1 = \left\lceil \frac{N_{FFT}/M1}{N_{IFFT}} \right\rceil * N_{CP},$$

where $\lfloor \rfloor$ is a mathematical operator for rounding down, and $\lceil \rceil$ is a mathematical operator for rounding up.

Referring to FIG. 10, the operations below are performed on $Q_K$:

1. the K point DFT/FFT is performed on the data information $Q_K$, thereby obtaining the data information $D_K = [d_0, d_1, d_2, d_3, ..., d_{K-1}]$;

2. the data information $D_K$ is filled into the K OFDM subcarriers corresponding to the system bandwidth in frequency domain; and

3. in the system frequency-domain bandwidth, in addition to occupying K OFDM subcarriers as above, other data information may be filled into subcarriers other than the K OFDM subcarriers, and thus, when the system frequency-domain bandwidth includes $N_{IFFT}$ OFDM subcarriers, the $N_{IFFT}$-point IDFT/IFFT is performed on the data filled into the $N_{IFFT}$ subcarriers, thereby obtaining the time domain data $T_{N_{IFFT}} = [t_0, t_1, t_2, t_3, ..., t_{N_{IFFT}-1}]$ of $N_{IFFT}$ sampling points.

When there is no other data sent in the system frequency-domain bandwidth in addition to occupying the K OFDM subcarriers, $T_{N_{IFFT}} = [t_0, t_1, t_2, t_3, ..., t_{N_{IFFT}-1}]$ is the sampling point data of M1 OOK symbols in time domain. $[t_0, t_1, t_2, t_3, ..., t_{N_{IFFT}/M1-1}]$ is the sampling point data of the first one among the M1 OOK symbols in time domain; $[t_{N_{IFFT}/M1}, t_{N_{IFFT}/M1+1},...,t_{2*N_{IFFT}/M1-1}]$ is the sampling point data of the second one among the M1 OOK symbols in time domain; and by analogy, $[t_{(M1-1)N_{IFFT}/M1}, t_{(M1-1)N_{IFFT}/M1+1}, ..., t_{N_{IFFT}-1}]$ is the sampling point data of the M1-th one among the M1 OOK symbols in time domain.

In addition, the CP needs to be added to the time domain data $T_{N_{IFFT}} = [t_0, t_1, t_2, t_3, ...,t_{N_{IFFT}-1}]$ of $N_{IFFT}$ sampling points before the data is sent, that is, $N_{cp}$ pieces of sampling point information at the end of the time domain data $T_{N_{IFFT}}$ are replicated to be at the start of the time domain data $T_{N_{IFFT}}$, thereby forming the time domain data of ($N_{IFFT}+N_{cp}$) sampling points and sending the time domain data of ($N_{IFFT}+N_{cp}$) sampling points.

After receiving the time domain data of ($N_{IFFT}+N_{cp}$) sampling points, the receiving end performs the below operations including:

(1) the time domain data of the first $N_{cp}$ sampling points is removed, thereby obtaining the received time domain data of $N_{IFFT}$ sampling points;

(2) a filter is used to filter the received time domain data, and the bandwidth of the filter is determined according to the bandwidth occupied by the OOK symbols in the frequency domain, where in this embodiment, the received time domain data after filtering is $R_{N_{IFFT}} = [r_0, r_1, r_2, r_3,...,r_{N_{IFFT}-1}]$;

(3) $R_{N_{IFFT}}$ is converted into received data of M1 OOK symbols in time domain, that is, $[r_0, r_1, r_2, r_3,..., r_{N_{IFFT}/M1-1}]$ is the received sampling point data of the first OOK symbol in time domain; $[r_{N_{IFFT}/M1}, r_{N_{IFFT}/M1+1}, ...,r_{2*N_{IFFT}/M1-1}]$ is the received sampling point data of the second OOK symbol in time domain; and by analogy, $[r_{(M1-1)N_{IFFT}/M1}, r_{(M1-1)N_{IFFT}/M1+1},..., r_{N_{IFFT}-1}]$ is the received sampling point data of the M1-th OOK symbol in time domain;

(4) for the received sampling point data of one OOK symbol in time domain, the time domain data of the first $N_{cp}$ sampling points is removed, thereby obtaining the sampling point data of the OOK symbol in time domain to be detected; and

(5) the sampling point data of the M1 OOK symbol in time domain to be detected is sent to the decoder so that the information carried by the M1 OOK symbols is obtained by decoding.

FIG. 11 is a diagram illustrating the structure of a message sending apparatus according to an embodiment of the present application. The message sending apparatus may perform the message sending method provided in any embodiment of the present application and has function modules and beneficial effects corresponding to the performed method. The message sending apparatus may be implemented by software and/or hardware and is generally integrated in an electronic device. The message sending apparatus specifically includes a sending module 101.

The sending module 101 is configured to send a first message, where the first message occupies at least P first-type symbols in time domain, where P is an integer greater than or equal to 1. The time domain positions of M first-type symbols among the at least P first-type symbols are aligned with or included in Q second-type symbols, where M is a positive integer less than P, and Q is a positive integer.

In some embodiments of the present application, in the message sending apparatus, at least one of the value of M or the value of Q is determined according to first information, where the first information includes at least one of the following: time domain resource ratio information for uplink time domain resources and downlink time domain resources; the number of downlink time domain resources within a period; the number of consecutive downlink time domain resources within a period; a downlink SCS size; the time domain length of a second-type symbol; or a CP value corresponding to a second-type symbol.

In some embodiments of the present application, in the message sending apparatus, the time domain resource ratio information is indicated by first index information.

In some embodiments of the present application, in the message sending apparatus, the downlink SCS size corresponds to at least one of pieces of the first information.

In some embodiments of the present application, in the message sending apparatus, the period is determined according to the downlink SCS.

In some embodiments of the present application, in the message sending apparatus, a first-type symbol includes at least one of the following: an OOK symbol, an amplitude shift keying symbol, a frequency shift keying symbol, or a phase shift keying symbol.

In some embodiments of the present application, in the message sending apparatus, a second-type symbol includes at least an OFDM symbol in time domain.

In some embodiments of the present application, in the message sending apparatus, M first-type symbols among the at least P first-type symbols carry first data information $S_{M1}$ with a length of M1, and the first data information $S_{M1}$ includes M1 elements, where M is an integer less than or equal to P, and M1 is an integer greater than or equal to 1.

In some embodiments of the present application, the message sending apparatus further includes a first data repetition module configured to repeat each element in the first data information $S_{M1}$ at least once to form second data information $Q_K$, where the length of the second data information $Q_K$ is K.

In some embodiments of the present application, in the message sending apparatus, the sum of the number of repetition times of each element in the second data information $Q_K$ is K.

In some embodiments of the present application, in the message sending apparatus, the number of repetition times of each element in the second data information $Q_K$ is the same or independently configured.

In some embodiments of the present application, in the message sending apparatus, a value of an element in the first data information $S_{M1}$ determines the number of repetition times of the element in the second data information $Q_K$.

In some embodiments of the present application, in the message sending apparatus, the first number of repetition times of an element with the value being 1 is greater than the second number of repetition times of an element with the value being 0.

In some embodiments of the present application, in the message sending apparatus, the first number of repetition times of an element with the value being 1 is C times of the second number of repetition times of an element with the value being 0, where C is an integer greater than or equal to 0.

In some embodiments of the present application, the message sending apparatus further includes a second data repetition module configured to convert each element in the first data information $S_{M1}$ into at least two sub-elements and repeat sub-elements to form second data information $Q_K$, where the length of the second data information $Q_K$ is K.

In some embodiments of the present application, in the message sending apparatus, the number of repetition times of each sub-element is the same or independently configured.

In some embodiments of the present application, in the message sending apparatus, the at least two sub-elements include a first sub-element and a second sub-element, and the values of all the first sub-elements in the second data information $Q_K$ are 0.

In some embodiments of the present application, in the message sending apparatus, the at least two sub-elements include a first sub-element and a second sub-element, and a value of each second sub-element in the second data information $Q_K$ is a value of a corresponding element or is determined according to a value of a corresponding element.

In some embodiments of the present application, before M first-type symbols among the at least P first-type symbols carry first data information $S_{M1}$ with a length of M1, the message sending apparatus further includes a scrambling module specifically configured to perform the following.

Second data information $Q_K$ is formed according to the first data information $S_{M1}$, where the first data information $S_{M1}$ includes M1 elements, and the length of the second data information $Q_K$ is K; and the second data information $Q_K$ is scrambled with scrambling code information.

In some embodiments of the present application, in the message sending apparatus, the second data information $Q_K$ is formed according to the first data information $S_{M1}$ in at least one of the following manners: each element in the first data information $S_{M1}$ is repeated at least once to form the second data information $Q_K$, or, each element in the first data information $S_{M1}$ is converted into at least two sub-elements, and each of the at least two sub-elements is repeated to form the second data information $Q_K$.

In some embodiments of the present application, in the message sending apparatus, elements in the second data information $Q_K$ corresponding to a same first-type symbol are scrambled with the same scrambling code information, or, at least two elements in the second data information $Q_K$ and corresponding to a same element in the first data information $S_{M1}$ are scrambled with the same scrambling code information.

In some embodiments of the present application, elements in the second data information $Q_K$ corresponding to different first-type symbols are scrambled with scrambling code information generated in at least one of the following manners: determining the scrambling code information based on a predetermined formula; independently generating the scrambling code information; or generating the scrambling code information based on a predetermined principle.

In some embodiments of the present application, elements in the second data information $Q_K$ corresponding to different elements in the first data information $S_{M1}$ are generated in at least one of the following manners: determining the pieces of scrambling code information based on a predetermined formula; independently generating the pieces of scrambling code information; or, generating the pieces of scrambling code information based on a predetermined principle.

In some embodiments of the present application, in the message sending apparatus, the scrambling code information includes at least one of the following: scrambling code parameters or a scrambling code parameter set.

In some embodiments of the present application, in the message sending apparatus, the number of the scrambling code parameters in the scrambling code parameter set is the same as the number of all the elements in the second data information $Q_K$ or the total number of all the sub-elements in the second data information $Q_K$.

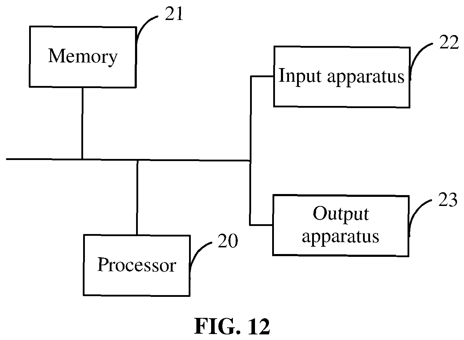

FIG. 12 is a diagram illustrating the structure of an electronic device according to an embodiment of the present application. The electronic device includes a processor 20, a memory 21, an input apparatus 22, and an output apparatus 23. One or more processors 20 may be provided in the electronic device. One processor 20 is shown as an example in FIG. 12. The processor 20, the memory 21, the input apparatus 22, and the output apparatus 23 in the electronic device may be connected via a bus or in other manners. The connection via a bus is shown as an example in FIG. 12.

As a computer-readable storage medium, the memory 21 is configured to store software instructions, computer-executable instructions, and modules, for example, a module (the sending module 101) corresponding to the network optimization apparatus in the embodiments of the present application. The processor 20 executes the software programs, instructions, and modules stored in the memory 21 to perform function applications and data processing of the electronic device, that is, to perform the preceding message sending method.

The memory 21 may mainly include an instruction storage region and a data storage region. The instruction storage region may store an operating system and application instructions required by at least one function. The data storage region may store data created according to the use of the electronic device. Additionally, the memory 21 may include a high-speed random-access memory and may further include a non-volatile memory such as at least one magnetic disk memory, a flash memory, or another non-volatile solid-state memory. In some examples, the memory 21 may also be a memory remote from the processor 20 and connectable to the electronic device via a network. Examples of the network include, but are not limited to, the Internet, an intranet, a local area network, a mobile communication network, and a combination thereof.

The input apparatus 22 may be configured to receive inputted digital or character information and generate key signal input related to user settings and function control of the electronic device. The output apparatus 23 may include a display device such as a display screen.

An embodiment of the present application further provides a storage medium containing computer-executable instructions which, when executed by a computer processor, are configured to cause the computer processor to perform a message sending method. The message sending method includes the following:

A first message is sent, where the first message occupies at least P first-type symbols in time domain, where P is an integer greater than or equal to 1.

The time domain positions of M first-type symbols among the at least P first-type symbols are aligned with or included in Q second-type symbols, where M is a positive integer less than P, and Q is a positive integer.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disc of a computer and includes several instructions for causing a computer device (which may be a personal computer, a server, or a network device) to perform the methods in the embodiments of the present application.

It is to be noted that units and modules included in the preceding embodiment of the message sending apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a portable compact disc read-only memory (CD-ROM), a digital versatile disc (DVD) or other optical storages, a magnetic cassette, a magnetic tape, a magnetic disk or other magnetic storage devices, or any other medium that is used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

The preferred embodiments of the present application are described above with reference to the drawings and are not intended to limit the scope of the claims of the present application. Any modifications, equivalent substitutions, and improvements made by those skilled in the art without departing from the scope and substantive content of the present application fall within the scope of the present application.

**Claims**

1. A message sending method, comprising:

   sending a first message, wherein the first message occupies at least P first-type symbols in time domain, wherein P is an integer greater than or equal to 1;
   wherein time domain positions of M first-type symbols among the at least P first-type symbols are aligned with or comprised in Q second-type symbols, and wherein M is a positive integer less than P, and Q is a positive integer.

2. The message sending method of claim 1, wherein at least one of a value of M or a value of Q is determined according to first information, and wherein the first information comprises at least one of the following:

   time domain resource ratio information for uplink time domain resources and downlink time domain resources;
   a number of downlink time domain resources within a period;
   a number of consecutive downlink time domain resources within a period;
   a downlink subcarrier spacing (SCS) size;
   a time domain length of a second-type symbol; or
   a cyclic prefix (CP) value corresponding to a second-type symbol.

3. The message sending method of claim 2, wherein the time domain resource ratio information is indicated by first index information.

4. The message sending method of claim 2, wherein the downlink SCS size corresponds to at least one of pieces of the first information.

5. The message sending method of claim 2, wherein the period is determined according to a downlink SCS.

6. The message sending method of claim 1, wherein a first-type symbol of the M first-type symbols comprises at least one of the following:
an on-off keying (OOK) symbol, an amplitude shift keying symbol, a frequency shift keying symbol, or a phase shift keying symbol.

7. The message sending method of claim 1, wherein a second-type symbol of the Q second-type symbols comprises at least an orthogonal frequency-division multiplexing (OFDM) time domain symbol.

8. A message sending method, comprising:
sending a first message, wherein the first message occupies at least P first-type symbols in time domain, wherein P is an integer greater than or equal to 1.

9. The message sending method of claim 8, wherein M first-type symbols among the at least P first-type symbols carry first data information $S_{M1}$ with a length of M1, and the first data information $S_{M1}$ comprises M1 elements, and wherein M is an integer less than or equal to P, and M1 is an integer greater than or equal to 1.

10. The message sending method of claim 9, further comprising:
repeating each of the M1 elements in the first data information $S_{M1}$ at least once to form second data information $Q_K$, wherein a length of the second data information $Q_K$ is K.

11. The message sending method of claim 10, wherein a sum of a number of repetition times of each of the M1 elements in the second data information $Q_K$ is K.

12. The message sending method of claim 10, wherein a number of repetition times of each of the M1 elements in the second data information $Q_K$ is the same or independently configured.

13. The message sending method of claim 10, wherein a value of an element in the first data information $S_{M1}$ determines a number of repetition times of the element in the second data information $Q_K$.

14. The message sending method of claim 13, wherein a first number of repetition times of an element with the value being 1 is greater than a second number of repetition times of an element with the value being 0.

15. The message sending method of claim 13, wherein a first number of repetition times of an element with the value being 1 is C times of a second number of repetition times of an element with the value being 0, wherein C is an integer greater than or equal to 0.

16. The message sending method of claim 9, further comprising:

converting each of the M1 elements in the first data information $S_{M1}$ into at least two sub-elements; and
repeating the at least two sub-elements of each of the M1 elements in the first data information $S_{M1}$ to form second data information $Q_K$, wherein a length of the second data information $Q_K$ is K.

17. The message sending method of claim 16, wherein a number of repetition times of each sub-element is the same or independently configured.

18. The message sending method of claim 16, wherein the at least two sub-elements comprise a first sub-element and a second sub-element, and values of all first sub-elements in the second data information $Q_K$ are 0.

19. The message sending method of claim 16, wherein the at least two sub-elements comprise a first sub-element and a second sub-element, and a value of each second sub-element in the second data information $Q_K$ is a value of a corresponding element in the first data information $S_{M1}$ or is determined according to a value of a corresponding element the first data information $S_{M1}$.

20. A message sending method, comprising:

sending a first message, wherein the first message occupies at least P first-type symbols in time domain, and P is an integer greater than or equal to 1.

21. The message sending method of claim 20, wherein M first-type symbols among the at least P first-type symbols carry first data information $S_{M1}$ with a length of M1, and the message sending method further comprises:

forming second data information $Q_K$ according to the first data information $S_{M1}$, wherein the first data information $S_{M1}$ comprises M1 elements, and a length of the second data information $Q_K$ is K; and

scrambling the second data information $Q_K$ with scrambling code information.

22. The message sending method of claim 21, wherein forming the second data information $Q_K$ according to the first data information $S_{M1}$ comprises at least one of the following:

repeating each of the M1 elements in the first data information $S_{M1}$ at least once to form the second data information $Q_K$; or

converting each of the M1 elements in the first data information $S_{M1}$ into at least two sub-elements, and repeating the at least two sub-elements of each of the M1 elements in the first data information $S_{M1}$ to form the second data information $Q_K$.

23. The message sending method of claim 21 or 22, wherein elements in the second data information $Q_K$ corresponding to a same first-type symbol are scrambled with same scrambling code information; or,

elements in the second data information $Q_K$ and corresponding to a same element in the first data information $S_{M1}$ are scrambled with same scrambling code information.

24. The message sending method of claim 21 or 22, wherein elements in the second data information $Q_K$ corresponding to a same first-type symbol are scrambled with scrambling code information independently configured, determined based on a predetermined formula, or generated based on a predetermined principle; or,

elements in the second data information $Q_K$ and corresponding to a same element in the first data information $S_{M1}$ are scrambled with scrambling code information independently configured, determined based on a predetermined formula, or generated based on a predetermined principle.

25. The message sending method of claim 21 or 22, wherein elements in the second data information $Q_K$ corresponding to different first-type symbols are scrambled with scrambling code information generated in at least one of the following manners:

the scrambling code information is determined based on a predetermined formula;

the scrambling code information is generated independently; or

the scrambling code information is generated based on a predetermined principle.

26. The message sending method of claim 21 or 22, wherein elements in the second data information $Q_K$ corresponding to different elements in the first data information $S_{M1}$ are scrambled with scrambling code information generated in at least one of the following manners:

the scrambling code information is determined based on a predetermined formula;

the scrambling code information is generated independently; or

the scrambling code information is generated based on a predetermined principle.

27. The message sending method of claim 21 or 22, wherein the scrambling code information comprises at least one of the following:

scrambling code parameters; or

a scrambling code parameter set.

28. The message sending method of claim 27, wherein a number of the scrambling code parameters in the scrambling code parameter set is the same as a number of all elements in the second data information $Q_K$ or a total number of all sub-elements in the second data information $Q_K$.

29. An electronic device, comprising:

   at least one processor; and
   a memory configured to store at least one instruction;
   wherein when the at least one instruction is executed by the at least one processor, the at least one processor performs the message sending method of any one of claims 1 to 28.

30. A computer-readable storage medium storing at least one instruction which, when executed by at least one processor, causes performing the message sending method of any one of claims 1 to 28.

Send a first message, where the first message occupies at least P first-type symbols in time domain, P is an integer greater than or equal to 1, time domain positions of M first-type symbols among the at least P first-type symbols are aligned with or included in Q second-type symbols, M is a positive integer less than P, and Q is a positive integer $\sim$110

**FIG. 1**

Send a first message, where the first message occupies at least P first-type symbols in time domain, and P is an integer greater than or equal to 1 $\sim$210

**FIG. 2**

CP              OFDM

| CP | OFDM |
|----|------|

| CP | OOK | OOK | ⋯ | OOK |
|----|-----|-----|---|-----|

M OOK symbols in time domain

**FIG. 3**

CP              OFDM

| CP | OFDM |
|----|------|

| CP | OOK | OOK | OOK | OOK | ⋯ | OOK | OOK |
|----|-----|-----|-----|-----|---|-----|-----|
| | Bit = 1 | Bit = 0 | Bit = 1 | Bit = 0 | | Bit = 0 | Bit = 1 |

M OOK symbols in time domain

**FIG. 4**

CP | OFDM

| CP | OOK | OOK | OOK | OOK | ··· | OOK | OOK |

Bit = 1    Bit = 0    Bit = 1    Bit = 0              Bit = 0    Bit = 1

M OOK symbols in time domain

**FIG. 5**

Send a first message, where the first message occupies at least P first-type symbols in time domain, and P is an integer greater than or equal to 1    ∿310

**FIG. 6**

CP | OFDM

| CP | OOK | OOK | ··· | OOK |

M OOK symbols in time domain

**FIG. 7**

$$Q_K = [\underbrace{s_0, s_0, \cdots, s_0}_{A}, \underbrace{s_1, s_1, \cdots, s_1}_{A},$$
$$\cdots, \underbrace{s_{M-1}, s_{M-1}, \cdots, s_{M-1}}_{A}]$$

K Point DFT/ FFT

$$D_K = [d_0, d_1, d_2, d_3, \cdots, d_{K-1}]$$

Other data

$d_0$
$d_1$
$\vdots$
$d_{K-1}$

Other data

N Point IDFT/ IFFT

$$T_N = [t_0, t_1, t_2, t_3, \cdots, t_{N-1}]$$

**FIG. 8**

Length of one OFDM symbol in time domain

| CP | OOK | OOK | ⋯ | OOK |

M1 OOK symbols in time domain

**FIG. 9**

Other data

$D_K = [d_0, d_1, d_2, d_3, \cdots, d_{K-1}]$

Qk → NFFT point DFT/FFT operations

$\frac{d_0}{d_1} \vdots \frac{d_{K-1}}{}$ NFFT point DFT/FFT operations

$TN_{IFFT} = [t_0, t_1, t_2, t_3, \cdots, tN_{IFFT}]$

Other data

**FIG. 10**

101

Sending module

**FIG. 11**

**FIG. 12**

## INTERNATIONAL SEARCH REPORT

| International application No. |
|---|
| **PCT/CN2023/136646** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

CNABS, CNTXT, ENTXTC, VEN, 3GPP: 符号, 键控, 通断, 幅移, 频移, 移频, 相移, 移相, 正交频分复用, 对齐, 重叠, 重合, 重复, 次, 加扰, 扰码, 低, 功耗, 功率, 唤醒, symbol, OOK, ASK, FSK, PSK, OFDM, align, overlay, overlap, repeat, repetition, time, number, scramble, low, power, wake, WU, WUS, WUP, WUR

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111937447 A (INTERDIGITAL PATENT HOLDINGS, INC.) 13 November 2020 (2020-11-13)<br>description, paragraphs [0005], [0091], [0103]-[0106], and [0165]-[0167], and figures 2-3 and 7 | 1-7, 29-30 |
| X | CN 111226466 A (MARVELL WORLD TRADE LTD.) 02 June 2020 (2020-06-02)<br>description, paragraphs [0072]-[0090] | 8-30 |
| X | CN 110583000 A (INTERDIGITAL PATENT HOLDINGS, INC.) 17 December 2019 (2019-12-17)<br>description, paragraphs [0097]-[0103] | 1-7, 29-30 |
| X | CN 111656823 A (SONY CORP.) 11 September 2020 (2020-09-11)<br>description, paragraphs [0095]-[0106] and [0160]-[0171] | 21-30 |
| A | QUALCOMM INC. "Remaining Issues on WUS for MTC"<br>*3GPP TSG RAN WG1 Meeting #93, R1-1807104*, 25 May 2018 (2018-05-25),<br>entire document | 1-30 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 February 2024** | **29 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/136646**

| Patent document cited in search report | | | Publication date (day/month/year) | Patent family member(s) | | | Publication date (day/month/year) |
|---|---|---|---|---|---|---|---|
| CN | 111937447 | A | 13 November 2020 | WO | 2019183457 | A1 | 26 September 2019 |
| | | | | EP | 3769566 | A1 | 27 January 2021 |
| | | | | KR | 20210003736 | A | 12 January 2021 |
| | | | | US | 2021014788 | A1 | 14 January 2021 |
| | | | | US | 2023362814 | A1 | 09 November 2023 |
| CN | 111226466 | A | 02 June 2020 | US | 2018343614 | A1 | 29 November 2018 |
| | | | | WO | 2018217657 | A1 | 29 November 2018 |
| | | | | US | 2020163016 | A1 | 21 May 2020 |
| | | | | EP | 3632165 | A1 | 08 April 2020 |
| CN | 110583000 | A | 17 December 2019 | KR | 20200012843 | A | 05 February 2020 |
| | | | | US | 2020162302 | A1 | 21 May 2020 |
| | | | | EP | 3619901 | A1 | 11 March 2020 |
| | | | | US | 2022109600 | A1 | 07 April 2022 |
| | | | | WO | 2018204790 | A1 | 08 November 2018 |
| CN | 111656823 | A | 11 September 2020 | EP | 3744129 | A1 | 02 December 2020 |
| | | | | US | 2021022077 | A1 | 21 January 2021 |
| | | | | WO | 2019145437 | A1 | 01 August 2019 |

Form PCT/ISA/210 (patent family annex) (July 2022)